# EUROPÄISCHE PATENTANMELDUNG

(11) **EP 2 283 964 A1**
(43) Veröffentlichungstag der Anmeldung: **16.02.2011**
(21) Anmeldenummer: 10006861.8
(22) Anmeldetag: 02.07.2010
(51) Int. Cl.: B23P 19/04, B62D 65/08

(54) **Verfahren zur Dichtungsapplikation an Bauteilen und Anlage zur Durchführung des Verfahrens**

(30) Priorität: 12.08.2009 DE 102009037215
(71) Anmelder: ThyssenKrupp Drauz Nothelfer GmbH, 74076 Heilbronn (DE)
(72) Erfinder: Siebenborn, Christoph, 66663 Merig (DE); Fenger, Norbert, 66773 Schwalbach/Elm (DE); Maier, Michael, 66625 Nohfelden (DE)
(74) Vertreter: Kirchner, Sven

(57) **Zusammenfassung**

Die Erfindung bezieht sich auf ein Verfahren zur Dichtungsapplikation an Bauteilen, vorzugsweise Türen von Kraftfahrzeugen, wobei das Bauteil (1) im Gehänge (2) einer Transporteinrichtung zur Applikationsstation geführt, das Bauteil (1) während der Dichtungsapplikation mit dem Gehänge (2) verbunden bleibt, das Bauteil (1) für den Vorgang der Dichtungsapplikation fest an einem beweglichen Greifer (6, 16) und/oder einer stationären Einrichtung fixiert wird und die Dichtung durch einen an einem Roboterarm (4) gelenkig gelagerten Anrollkopf (5) durch Bewegung des Anrollkopfes (5) entlang der Dichtungsfläche oder durch eine Dichtungsapplikationsplatte, auf die die Dichtung aufgesteckt ist, auf das Bauteil (1) geklebt wird.

Die Anlage zur Dichtungsapplikation besteht aus einem von einer Transporteinrichtung geführten Gehänge (2) für das Bauteil (1), einem mit dem Bauteil (1) fixierbaren Greifer (6, 16), einem Meßsystem zur Erfassung der für die Dichtungsapplikation fixierten Position des Bauteiles(1) und/oder des Greifers (6, 16), Dichtungsapplikationseinrichtungen zum Aufbringen der Dichtung auf die Dichtungsfläche des Bauteiles (1) und einer Steuerungseinheit zur Steuerung der Bewegung der Dichtungsapplikationseinrichtung in Abhängigkeit von den gemessenen Positionsdaten des Bauteiles (1) und/oder des Greifers(6, 16).

## Beschreibung

Die Erfindung bezieht sich auf ein Verfahren zur Dichtungsapplikation an Bauteilen, vorzugsweise Türen von Kraftfahrzeugen und eine Anlage zur Durchführung des Verfahrens.

An Anbauteilen, insbesondere Türen von Kraftfahrzeugen können die erforderlichen Dichtungen in verschiedener Weise aufgeklebt werden. Neben der Anbringung eines Dichtungsprofiles von Hand gehört es zum Stand der Technik, die Türdichtung zunächst auf eine der Kontur der Dichtungsfläche der Tür angepasste Applikationsplatte aufzustecken und dann insbesondere einen geschlossenen Dichtungsring gegen die Dichtfläche am Fahrzeug zu drücken (vgl. EP 0 849 106 B1). Alternativ dazu ist es bekannt, die Dichtung mittels eines robotergeführten Anrollkopfes auf die Dichtfläche am Fahrzeug aufzukleben (vgl. DE 39 41 376 C2). Aus der DE 101 38 781 A1 ist es darüber hinaus bekannt, eine Dichtung an einer Fahrzeugtür umlaufend aufzurollen. Bei dem Stand der Technik wird jeweils die Tür aus dem Gehänge einer Transporteinrichtung entnommen und mit einer besonderen Handlingseinrichtung zur Applikationsstation geführt, was einen hohen Aufwand bedeutet.

Der Erfindung liegt die Aufgabe zu Grunde, ein Verfahren zur Dichtungsapplikation und eine Anlage zur Durchführung dieses Verfahrens vorzuschlagen, bei dem auch die aufwändige Loslösung des Bauteils vom Gehänge und den zusätzlichen Transport zur Applikationsanlage verzichtet werden kann.

Die Lösung dieser Aufgabe ist in den Ansprüchen 1 und 8 angegeben. Die Unteransprüche 2 - 7 und 9 - 14 enthalten zusätzliche Verfahrens- und Vorrichtungsmerkmale.

Erfindungsgemäß ist vorgesehen, dass das im Gehänge einer Transporteinrichtung befindliche Bauteil mit einem beweglichen Greifer oder einer Greiferplatte und/oder in einer in der Nähe der Transporteinrichtung befindlichen stationären Einrichtung positionsgenau fixiert wird und dass die Dichtung entweder durch einen an einem Roboterarm gelenkig gelagerten Anrollkopf durch Bewegung des Anrollkopfes entlang der Dichtungsfläche oder durch eine Dichtungsapplikationsplatte, auf die die Dichtung aufgesteckt ist, auf das Bauteil geklebt wird. Mit entsprechender Messtechnik wird dabei die Position des Bauteiles im Gehänge festgestellt, um dem Antrieb des Roboters oder der Handhabungsvorrichtung für die Dichtungsapplikationsplatte die entsprechenden Lageabweichungen zu übergeben. Von besonderer Bedeutung ist bei dem erfindungsgemäßen Verfahren und der Anlage die genaue Positionierung bzw. Positionserfassung des Bauteiles. Zum einen muss die Position des Bauteiles eindeutig bestimmt sein, damit der am Roboterarm gelenkig befestigte Anrollkopf die genaue Kontur des Bauteiles abfährt, zum anderen sollen jedoch teure Meßsysteme möglichst vermieden werden. Dazu sind insbesondere zur Bewegung des Greifers Linearführungen und Gelenke vorgesehen, mit denen der an einem Träger befestigte Greifer relativ zum Bauteil in die Position zur Dichtungsapplikation bewegt wird.

Die Erfindung wird anhand der beigefügten Figuren 1 - 6 beispielsweise näher erläutert. Es zeigen
- Fig. 1: ein erstes Anlagenkonzept bei dem ein Greifer 6 mit einem Träger 7 an das Bauteil 1 herangefahren wird,
- Fig. 2: eine weitere Ansicht zum Anlagenkonzept nach Fig. 1 mit einer vergrößerten Darstellung der sphärischen Aufhängung des Greifers 6 an dem Träger 7,
- Fig. 3: ein alternatives Anlagenkonzept, bei dem bestimmte Punkte des Bauteiles 1 mit Hilfe eines Kamerasystemes 17 aufgenommen werden und die Messdaten zur Fixierung des Greifers 6 an dem Bauteil 1 dienen,
- Fig. 4 - 6: ein weiteres Anlagenkonzept.

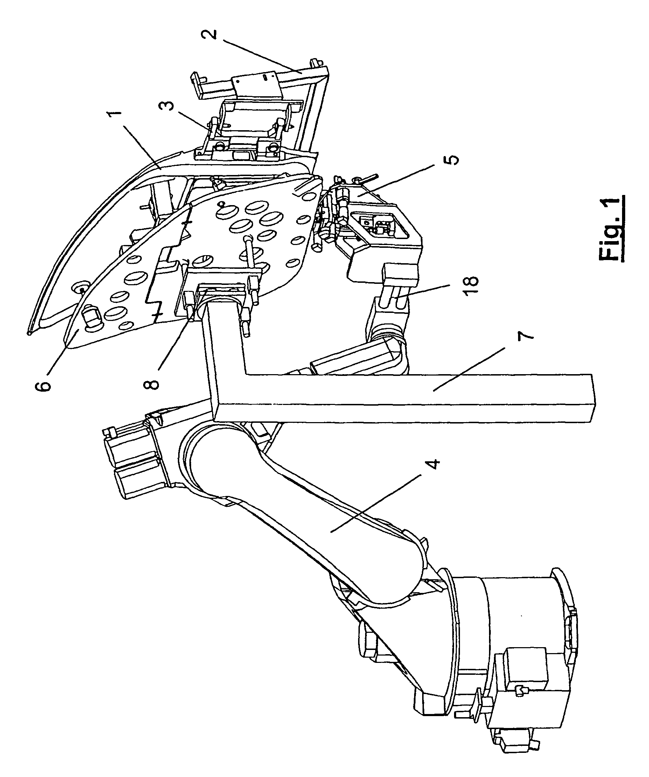

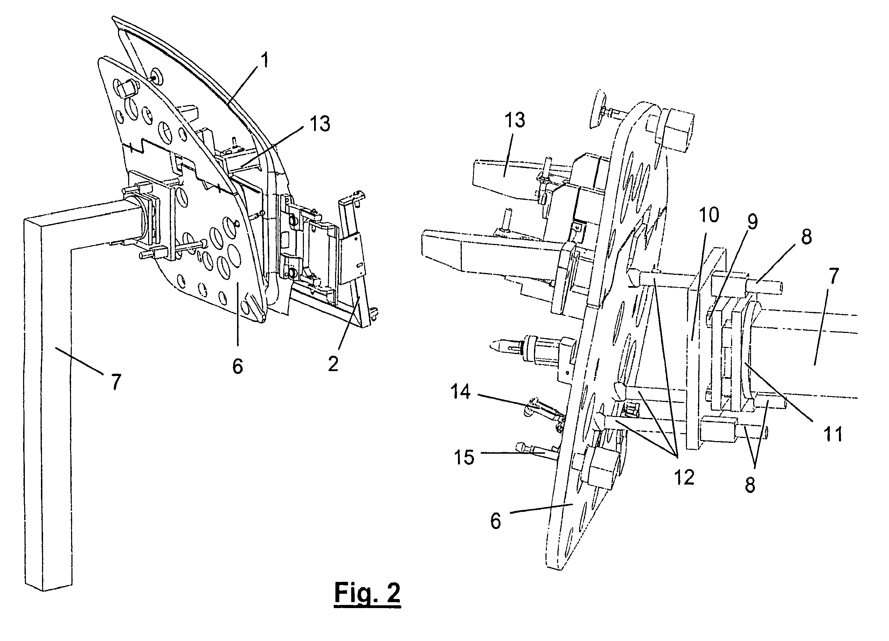

Bei dem Anlagenkonzept nach den Fig. 1 und 2 fährt der Träger 7 mit angebrachtem Greifer 6 an das Bauteil 1 heran. Das Bauteil 1 ist mit Befestigungselementen 3 im Gehäuse 2 befestigt und besteht aus einer Fahrzeugtür, an die der Greifer 6 von der Türinnenblechseite aus heranfährt. Der Greifer 6 ist mit einer sphärischen Aufhängung ausgestattet. Zum horizontalen und vertikalen Ausgleich dienen die Linearführungen 8, 9 und 10, die zusätzlich mit Messsensoren und einer Feststelleinrichtung versehen sind. Zum Ausgleich der Rotation um den Träger 7 der Fixiereinrichtung besitzt dieser ein Gelenk 11, welches ebenfalls mit Messsensoren und einer Feststelleinrichtung bestückt ist. Um die drei letzten Freiheitsgrade abzudecken, sind an der Aufhängung die drei horizontalen Linearführungen 8 jeweils mit einem Kugelgelenk 12 an dem Greifer 6 bzw. der Greiferplatte angeordnet. Auch diese linearen Führungen 8 besitzen Messsensoren und können festgestellt werden. Hierdurch werden zwei Rotationen und eine Translation zugelassen. Alle Führungen der Aufhängung sind zusätzlich mit Federn ausgestattet, um den Greifer 6 vor dem Andocken an das Bauteil 1 in einer Ausgangsstellung zu halten und zu gewährleisten, dass der Greifer 6 sich richtig an die Position des Bauteiles 1 anpassen kann. Der Greifer 6 selbst ist mit Spannern 14, Voreinweisern 13 und Zentrierdornen 15 ausgestattet. Bei dem Heranfahren des Greifers 6 an das sich im Gehänge 2 befindliche Bauteil 1 bringen die Voreinweiser 13 das Bauteil 1 bereits grob in Position. Die Feinpositionierung übernehmen schließlich mehrere Zentrierdorne 15. Nach dem darauf folgenden Verspannen des Bauteiles 1 an dem Greifer 6 sowie dem Feststellen der einzelnen Linearführungen 7, 8 und 9 wird die Position der nun entstandenen Einheit bestimmt. Dies geschieht durch die Auswertung der Messsignale der Sensoren, welche an den Linearführungen 8, 9 und 10 angebracht sind. Die berechnete Position des Bauteils 1 wird schließlich an den Applikationsroboter übergeben. Dieser kann nun seine, um die Abweichungsmaße in den einzelnen Achsen verschobenen Applikationsbahnen abfahren. Der Roboter mit dem Roboterarm 4 befindet sich ebenfalls auf der Seite des Türinnenbleches. Um nicht von dem Träger 7 der Fixiereinrichtung während der Applikation behindert zu werden, besitzt der Roboterarm 4 eine siebte, lineare Achse mit einem Linearantrieb 18, der ausgefahren werden kann, um die Dichtung auch unter dem Träger 7 zu applizieren.

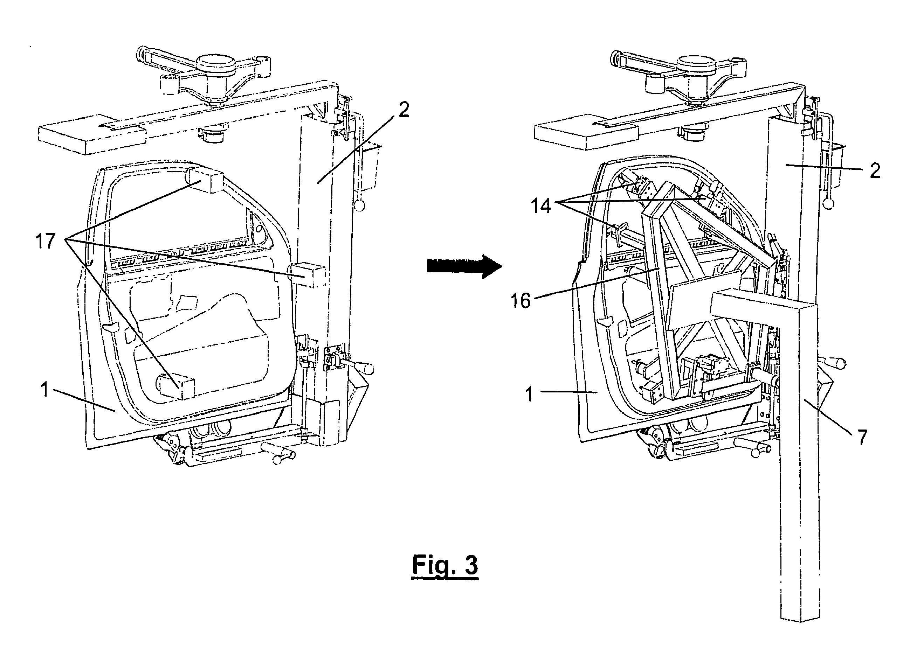

Bei dem Anlagenkonzept nach Fig. 3 werden zunächst markante Punkte des Bauteiles 1, in diesem Fall ebenfalls der Fahrzeugtür, mit Hilfe eines Kamerasystemes 17 aufgenommen. Aus den Messwerten kann anschließend die genaue Position des Bauteiles 1 errechnet werden. Diese Daten werden an die Fixiereinrichtung übermittelt. Der Greifer 16 passt sich der Position des Bauteiles 1 an und verspannt es mittels der Spanner 14. Die Positionsdaten des Bauteiles 1 werden gleichermaßen an den Roboter übergeben. Analog zum Anlagenkonzept nach den Fig. 1 und 2 kann dieser nun mit dem Anrollkopf 5 die Applikationsbahn abfahren, wobei auch hier die Abweichungen von Position Null berücksichtigt werden. Da der Roboter ebenfalls auf der Türinnenblechseite steht, benötigt er gleichermaßen eine siebte lineare Achse mit Linearantrieb 18.

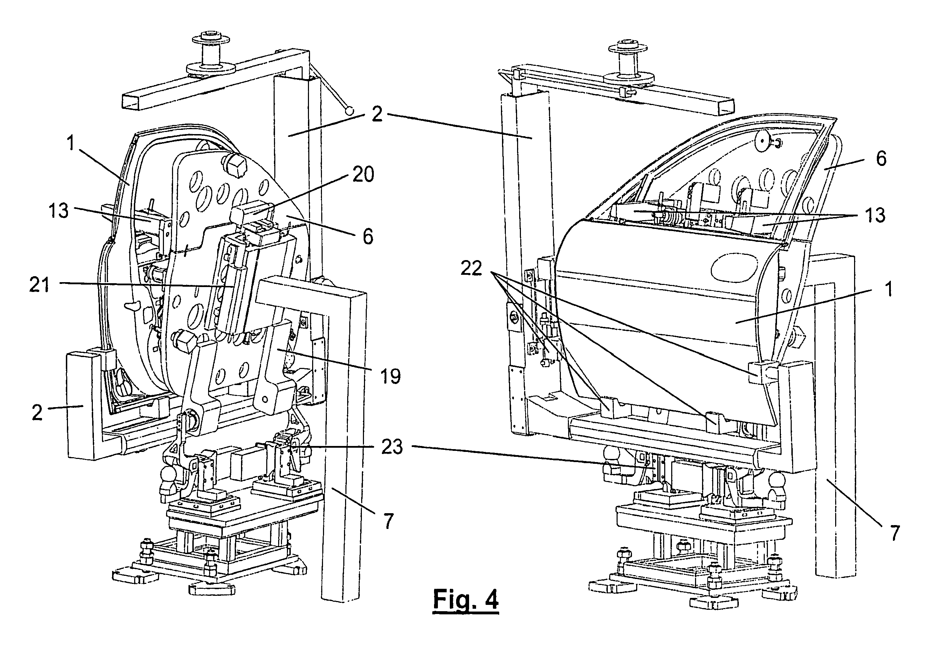

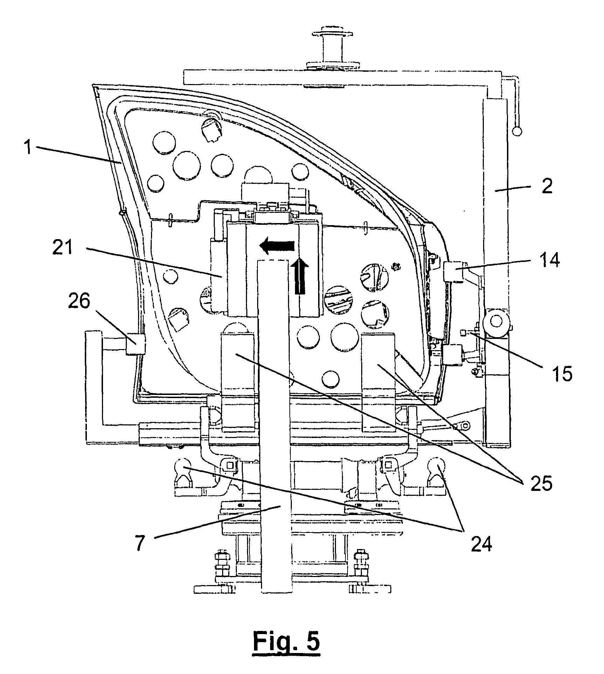

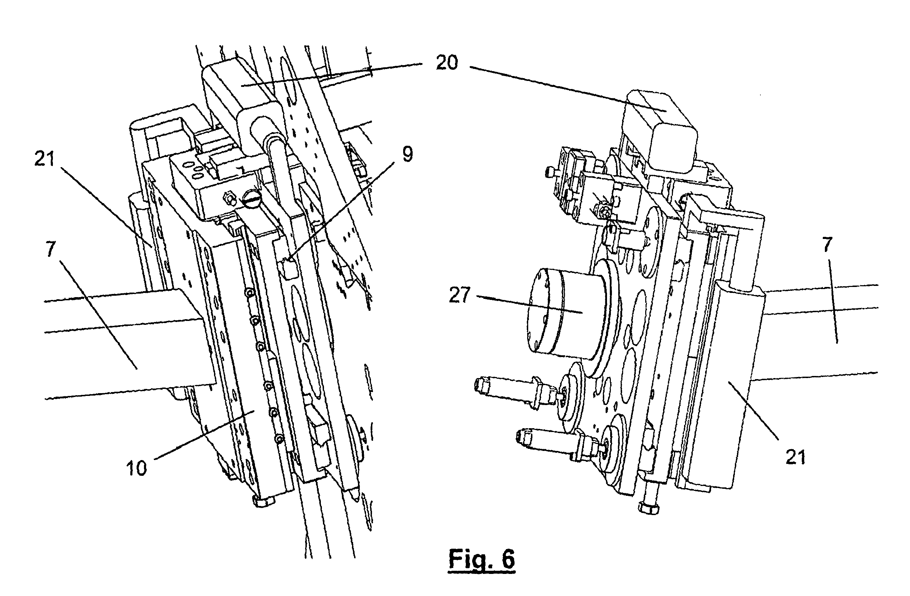

Bei dem weiteren alternativen Anlagenkonzept nach den Fig. 4 - 6 fährt der Träger 7 mit angebrachtem Greifer 6, der in diesem Fall als Platte oder als Balkenkonstruktion ausgebildet sein kann, an das Bauteil 1 heran. Der Greifer 6 ist in diesem Fall mit einer sphärischen Aufhängung 19 ausgestattet. Voreinweiser 13 und Zentrierdorne 15 sowie diverse pneumatische Spanner 14 sind zum Fixieren und Spannen des Bauteiles 1 vorgesehen. Beim Heranfahren des Greifers 6 an das Bauteil 1 passt er sich dank sphärischer Aufhängung 19 an die Position des Bauteiles 1 an. Danach kann das Bauteil 1 mit den Spannern 14 an dem Greifer 6 fixiert werden. Das Bauteil 1 befindet sich jetzt, innerhalb des Greifers 6 in einer eindeutigen Position. Die Position des Greifers 6 selbst, ist zu diesem Zeitpunkt jedoch noch undefiniert. Um ihn in eine eindeutige Position zu bringen und ihm Freiheitsgrade zu entziehen, sind zum einen an den linearverschiebbaren Platten der sphärischen Aufhängung 19 zwei Pneumatikzylinder angebracht. Ein Zylinder 20 dient zur horizontalen und ein weiterer Zylinder 21 zur vertikalen Verstellung. Der horizontale Zylinder 20 fährt nun bis auf Anschlag aus, wobei der vertikale Zylinder 21 komplett einfährt. Dies hat zur Folge, dass der Greifer 6 mit dem in ihm verspannten Bauteil 1 in horizontaler und vertikaler Richtung auf eine definierte Stellung fährt, und zwar entsprechend den in Fig. 5 dargestellten Pfeilen nach links oben. Zuvor wurde allerdings der hintere Aufnehmer 22 weggeklappt. Um an dieser Stelle auch noch die restlichen drei rotatorischen Freiheitsgrade zu eliminieren und Greifer 6 samt Bauteil 1 im Raum eindeutig auf Position zu bringen, wird eine an sich bekannten Absteckung 23 benötigt. Diese besteht im Wesentlichen aus zwei pneumatischen Kraftspannern, an deren Spannarmen jeweils eine Zentrierkugel 24 angebracht ist. Diese Zentrierkugeln 24 greifen beim Auslösen der Kraftspanner in dafür vorgesehene hohlkugelige Zentrierkugelaufnahmen 25 ein, welche am Greifer 6 angebracht sind. Durch diese zusätzliche Verbindung sind nun dem Greifer 6 alle Freiheitsgrade entzogen und das Bauteil 1 wird immer in die gleiche Position gebracht. Durch dieses System muss der Applikationsroboter nur einmal programmiert werden und kann immer dieselbe Bahn abfahren, sodass vorher auch keine Bahnabweichung berechnet werden muss. Dieses Anlagenkonzept kommt also ohne Messtechnik aus. Wie bei den beiden anderen Anlagenkonzepten muss der Roboter allerdings auch mit einer siebten Achse ausgestattet werden, die durch den Linearantrieb 18 erreicht wird. In Fig. 5 ist zusätzlich ein Federelement 26 zur Einspannung bzw. zum Toleranzausgleich dargestellt. Aus Fig. 6 ist in der unteren Ansicht zusätzlich ein Kugelgelenk 27 ersichtlich, dass die sphärische Aufhängung 19 ermöglicht.

### Bezugszeichenliste:

- 1: Bauteil (Tür eines KFZ)
- 2: Gehänge
- 3: Befestigungselemente (für 1 an 2)
- 4: Roboterarm
- 5: Anrollkopf
- 6: Greifer
- 7: Träger (für 6)
- 8: Linearführung (horizontal)
- 9: Linearführung (horizontal)
- 10: Linearführung (vertikal)
- 11: Gelenk (an 7)
- 12: Gelenk (zwischen 8 und 6)
- 13: Voreinweiser (an 6)
- 14: Spanner (an 6)
- 15: Zentrierdorn (an 6)
- 16: Greifer
- 17: Kamerasystem
- 18: Linearantrieb (an 4, für 5)
- 19: sphärischer Aufhängung
- 20: Zylinder (für horizontale Verstellung von 6)
- 21: Zylinder (für vertikale Verstellung von 6)
- 22: Aufnehmer
- 23: Absteckung
- 24: Zentrierkugeln
- 25: Zentrierkugelaufnehmer
- 26: Federelement
- 27: Kugelgelenk

## Patentansprüche

1. Verfahren zur Dichtungsapplikation an Bauteilen, vorzugsweise Türen von Kraftfahrzeugen, wobei
a) das Bauteil (1) im Gehänge (2) einer Transporteinrichtung zur Applikationsstation geführt,
b) das Bauteil (1) während der Dichtungsapplikation mit dem Gehänge (2) verbunden bleibt,
c) das Bauteil (1) für den Vorgang der Dichtungsapplikation fest an einem beweglichen Greifer (6, 16) und/oder einer stationären Einrichtung fixiert wird und
d) die Dichtung durch einen an einem Roboterarm (4) gelenkig gelagerten Anrollkopf (5) durch Bewegung des Anrollkopfes (5) entlang der Dichtungsfläche oder durch eine Dichtungsapplikationsplatte, auf die die Dichtung aufgesteckt ist, auf das Bauteil (1) geklebt wird.

2. Verfahren nach Anspruch 1, **dadurch gekennzeichnet, dass** die genaue Position des Bauteiles (1) und/oder des Greifers (6,16) über ein Meßsystem erfasst und die damit gemessenen Positionsdaten des Bauteiles(1) zur Steuerung des Roboterarmes (4) und/oder Anrollkopfes(5) benutzt werden.

3. Verfahren nach Anspruch 1 oder 2, **dadurch gekennzeichnet, dass** der Greifer (6, 16) über Linearführungen (8, 9, 10) und Gelenke (11, 12) an einem Träger (7) befestigt ist, relativ zum Bauteil (1) in die Position zur Dichtungsapplikation bewegt und die jeweilige Position über an den einzelnen Linearführungen (8, 9, 10) und Gelenken (11, 12) angeordnete Messeinrichtungen erfasst wird.

4. Verfahren nach Anspruch 3, **dadurch gekennzeichnet, dass** der Greifer (6) mit Hilfe des Trägers (7) an das Bauteil (1) herangefahren, daran fixiert und verspannt wird und das Bauteil (1) dann in eine definierte und in der Steuerung des Roboterarmes (4) gespeicherte Position verfahren und dort während der Dichtungsapplikation gehalten wird.

5. Verfahren nach einem der vorhergehenden Ansprüche, **dadurch gekennzeichnet, dass** definierte Punkte an dem Bauteil(1) mit Hilfe eines Kamerasystems (17) erfasst werden, um die genaue Position des Bauteiles(1) für die Dichtungsapplikation zu bestimmen.

6. Verfahren nach Anspruch 5, **dadurch gekennzeichnet, dass** die mit dem Kamerasystem (17) erfasste Position des Bauteiles(1) zur Positionierung des Greifers (6, 16) an dem Bauteil (1) und/oder zur Steuerung des Anrollkopfes (5) verwendet wird.

7. Verfahren nach einem der vorhergehenden Ansprüche , **dadurch gekennzeichnet, dass** der Anrollkopf (5) gegenüber dem Roboterarm (4) bei der Dichtungsapplikation in einer siebten Achse linear bewegt wird.

8. Anlage zur Dichtungsapplikation an Bauteilen (1), vorzugsweise Türen an Kraftfahrzeugen zur Durchführung des Verfahrens nach den vorhergehenden Ansprüchen bestehend aus einem von einer Transporteinrichtung geführten Gehänge (2) für das Bauteil (1), einem mit dem Bauteil (1) fixierbaren Greifer (6, 16), einem Meßsystem zur Erfassung der für die Dichtungsapplikation fixierten Position des Bauteiles (1) und/oder des Greifers(6, 16), Dichtungsapplikationseinrichtungen zum Aufbringen der Dichtung auf die Dichtungsfläche des Bauteiles (1) und einer Steuerungseinheit zur Steuerung der Bewegung der Dichtungsapplikationseinrichtung in Abhängigkeit von den gemessenen Positionsdaten des Bauteiles (1) und/oder des Greifers(6, 16).

9. Anlage nach Anspruch 8, **dadurch gekennzeichnet, dass** die Dichtungsapplikationsanlage aus einem an einem Roboterarm(4) gelenkig gelagerten und entlang der Dichtungsfläche bewegbaren Anrollkopf (5) besteht.

10. Anlage nach Anspruch 8, **dadurch gekennzeichnet, dass** die Dichtungsapplikationsanlage aus einer Dichtungsapplikationsplatte besteht, bei der die Dichtung vor Aufkleben auf das Bauteil auf umlaufend angeordnete Halteleisten aufgesteckt ist.

11. Anlage nach Anspruch 9, **dadurch gekennzeichnet, dass** am Roboterarm (4) ein Linearantrieb (18) zur Bewegung des Anrollkopfes (5) in einer siebten Achse angeordnet ist.

12. Anlage nach einem der Ansprüche 8 bis 11, **dadurch gekennzeichnet, dass** der Greifer (6, 16) eine sphärische Aufhängung (19) besitzt.

13. Anlage nach Anspruch 12, **dadurch gekennzeichnet, dass** der Greifer (6, 16) im Bereich der sphärischen Aufhängung (19) linear in horizontaler und vertikaler Richtung verschiebbar ist.

14. Anlage nach einem der Ansprüche 8 bis 13, **dadurch gekennzeichnet, dass** der Greifer (6, 16) durch eine Absteckung (23) mit Zentrierkugelaufnahmen (25) und Zentrierkugeln (24) fixierbar ist.
